# EUROPÄISCHE PATENTSCHRIFT

(11) **EP 1 091 465 B1**
(45) Veröffentlichungstag und Bekanntmachung des Hinweises auf die Patenterteilung: **03.12.2003**
(21) Anmeldenummer: 00119030.5
(22) Anmeldetag: 01.09.2000
(51) Int. Cl.: H02G 3/22, H02G 3/08

(54) **Kabeldurchführung**
Cable feedthrough
Traversée de câble

(30) Priorität: 28.09.1999 DE 19946357
(43) Veröffentlichungstag der Anmeldung: 11.04.2001
(73) Patentinhaber: MAN Nutzfahrzeuge Aktiengesellschaft, 80976 München (DE)
(72) Erfinder: Bliem, Alfred, 85250 Altomünster (DE); Eisermann, Günter, 85757 Karlsfeld (DE)

(56) Entgegenhaltungen:
- EP-A- 0 365 808
- US-A- 4 415 044

## Beschreibung

### Stand der Technik

Die Erfindung geht aus von einer Kabeldurchführung zur wasserdichten Durchführung mindestens eines Kabels durch eine nur von einer Seite her zugängige Öffnung in einer Wand gemäß der Gattung von Patentanspruch 1.

Solche nur von einer Seite her zugängigen Öffnungen einer Wand können insbesondere in Karosserieteilen von Kraftfahrzeugen vorhanden sein, bei welchen im Karosserieinneren im Bereich der Öffnung vorhandene Innenwände oder Aggregate einen Zugang zur Öffnung von innen erschweren oder unmöglich machen.

Für den Fall, daß durch eine solche, nur von einer Seite her zugängige Öffnung ein oder mehrere Kabel hindurchgeführt werden sollen, z.B. zur Stromversorgung eines im Außenbereich der Karosserie befestigten strombetriebenen Aggregates, muß verhindert werden, daß am durch die Öffnung ragenden Kabel vorbei Wasser oder Schmutz in das Karosserieinnere eindringt.

Aus der EP 0 365 808 B1 ist ein von Hand montier- und demontierbarer, wasserdichter Verschluß für eine nur von einer Seite her zugängige Öffnung in einer Wand geringer Dicke bekannt. In einem Anwendungsfall dient der bekannte Verschluß als Blindstopfen zum Verschließen einer Antennenbohrung in der Karosserie eines Kraftfahrzeuges, welche zur Nachrüstung der Antenne vorgebohrt wurde, und beinhaltet folgendes :
- einen Verschlußstopfen für die Öffnung mit einer Abdeckkappe, einem Dichtungsring, einem Konterbügel und einer Spannschraube, wobei die Abdeckkappe unterseitig den in Einbaulage des Verschlußstopfens an der zugängigen Seite der Wand um die Öffnung zur Anlage kommenden Dichtungsring und einen senkrecht von ihr wegragenden Verdrehsicherungszapfen trägt sowie eine Durchgangsbohrung zur Hindurchführung der Spannschraube aufweist und
- der in Einbaulage des Verschlussstopfens an der unzugängigen Seite der Wand zur Anlage kommende Konterbügel ein den Verdrehsicherungszapfen aufnehmendes Durchgangsloch und eine in Zusammenbaulage zur Durchgangsbohrung der Abdeckkappe fluchtende Kernlochbohrung zum Eindrehen der Spannschraube aufweist und derart ausgebildet ist, dass er bei gegenüber der Dicke der Wand größerem Abstand zwischen ihm und der Abdeckkappe von der zugänglichen Seite der Wand aus schräg durch die Öffnung hindurch in eine korrekte Einbauposition bringbar ist.

Der Gegenstand der vorstehend genannten Patentschrift betrifft daher lediglich einen Verschluss für eine nur von einer Seite her zugängige Öffnung in einer Wand, wobei keine weiteren Funktionen vorgesehen sind.

Aus US-A-4,415,044 ist ein wetterfester Klemmenkasten mit einer Abdeckung bekannt, mit dessen Klemmen mehrere Leitungen eines herangeführten Kabels durch Schraubverbindungen verbunden sind. Die einzelnen Klemmen sind durch Öffnungen in der Gehäusewand und der Wand der Komponenten, mit denen die elektrischen Leitungen über die Klemmen verbunden werden sollen, wasserdicht hindurchgeführt. Hierzu sind Abdichtungen in den jeweiligen Öffnungen, durch die die Klemmen hindurchgeführt werden, vorgesehen. Das Gehäuse des Klemmenkastens ist mit einem Deckel versehen, welcher geöffnet und geschlossen werden kann. Das ankommende Kabel ist durch einen an den Deckel des Klemmenkastens angeformten Kabelkanal geführt.

Der vorliegenden Erfindung liegt die Aufgabe zugrunde, eine Kabeldurchführung zur Durchführung mindestens eines Kabels durch eine nur von einer Seite her zugängige Öffnung in einer Wand zu schaffen, welche auf einfache Weise von der zugängigen Seite der Wand her in der Öffnung montierbar und durch welche eine zuverlässige Abdichtung der Bereiche diesseits und jenseits der Wand gegeneinander gegeben ist.

Erfindungsgemäß wird diese Aufgabe durch die Merkmale des Anspruches 1 gelöst.

### Vorteile der Erfindung

Die erfindungsgemäße Kabeldurchführung hat den Vorteil, dass wegen der Abdeckung des Kappenunterteils durch das Kappenoberteil ein wirksamer Spritzwasserschutz für die Kabeldurchführungsbohrungen im Kappenunterteil gegeben ist. Zur Sicherung der Dichtheit ist darüber hinaus jede Kabeldurchführungsbohrung mit einer eigenen Kabeldichtung versehen, die den Spalt zwischen Kabelaußenumfang und dem Innenumfang der Kabeldurchführungsbohrung ausfüllt. Der in der Abdeckkappe ausgebildete Kabelführungskanal gewährleistet einen zusätzlichen Schutz gegen auf die Öffnung gerichtetes Spritzwasser, da er nicht in Richtung der Mittelachse der Öffnung sondern quer zu dieser verläuft Durch die Zweiteilung der Abdeckkappe in Kappenoberteil und Kappenunterteil können die Kabel zunächst durch die Kabeldurchführungsöffnungen im Kappenunterteil und danach durch den Kabelkanal geführt werden oder umgekehrt, bevor das Kappenoberteil aufgesetzt wird.

Im weiteren kann der Verschlußstopfen der Kabeldurchführung eine standardisierte, an einen bestimmten Öffnungsdurchmesser angepaßte Größe aufweisen, so daß mit einem einzigen Verschlußstopfen eine unterschiedliche Anzahl und unterschiedliche Durchmesser von Kabeln durch die Öffnung hindurchgeführt werden können, ohne daß hierfür der Durchmesser der Öffnung verändert werden müßte. Zu diesem Zweck ist lediglich das mit den Kabeldurchführungsbohrungen versehene Kappenunterteil an die jeweils durch die Öffnung zu führenden Kabel anzupassen, während die restlichen Bestandteile, wie z.B. das Kappenoberteil, der Dichtungsring oder der Konterbügel unverändert bleiben können. Auf diese Weise ergibt sich eine hohe Anzahl von Gleichteilen, was sich günstig auf die Fertigungskosten der erfindungsgemäßen Kabeldurchführung auswirkt.

Schließlich ist der mit den Kabeln vormontierte Verschlußstopfen mit einem einzigen Handgriff in die Öffnung einsetzbar. Anschließend muß lediglich die Spannschraube angezogen werden, um die Kabeldurchführung gegenüber der Wand in einer lagesicheren Position festzuspannen.

Durch die in den Unteransprüchen aufgeführten Maßnahmen sind vorteilhafte Weiterbildungen und Verbesserungen der im Patentanspruch 1 angegebenen Kabeldurchführung möglich.

### Zeichnungen

Nachstehend ist ein Ausführungsbeispiel der Erfindung in den Zeichnungen dargestellt und in der nachfolgenden Beschreibung näher erläutert. In den Zeichnungen zeigen :
- Fig. 1: eine Seitenansicht einer bevorzugten Ausführungsform einer Kabeldurchführung gemäß der Erfindung;
- Fig.2: eine Schnittdarstellung entlang der Linie II - II von Fig.1;
- Fig.3: eine Schnittdarstellung entlang der Linie III - III von Fig.2;
- Fig.4: eine isometrische Ansicht auf die Kabeldurchführung von Fig.1 ohne Kabel;
- Fig.5: eine isometrische Ansicht der Kabeldurchführung von Fig.4 in aufgeklappter Stellung.

### Beschreibung des Ausführungsbeispiels

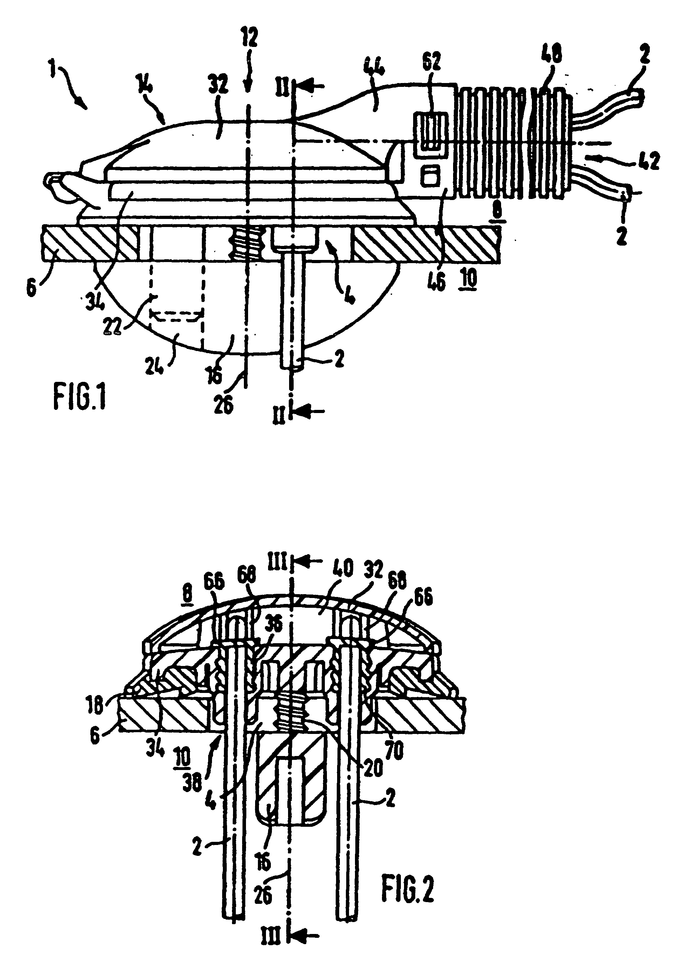

Die insgesamt mit 1 bezeichnete Kabeldurchführung dient gemäß der bevorzugten Ausführungsform zur wasserdichten Durchführung von zwei elektrischen Kabeln 2 durch eine nur von einer Seite her zugängige Öffnung 4 in einem Karosserieteil 6 eines Kraftfahrzeugs, wobei die zugängige Seite mit 8 und die unzugängige Seite mit 10 bezeichnet ist. In den Fig.1 bis Fig.3 ist die Kabeldurchführung 1 in Einbaulage dargestellt.

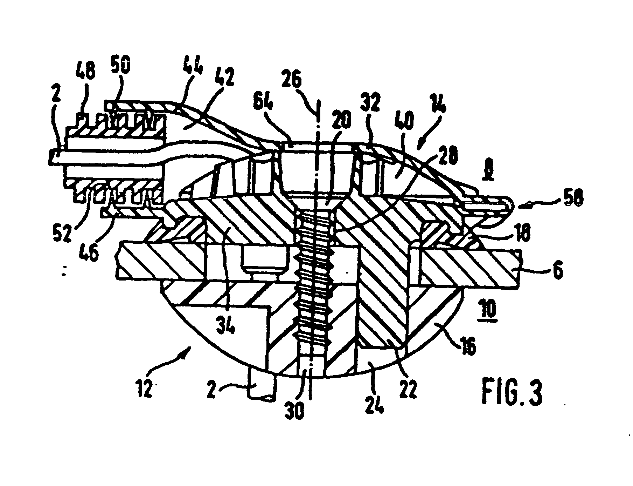

Die Kabeldurchführung 1 beinhaltet einen Reduzierstopfen 12 für die Öffnung 4 mit einer Abdeckkappe 14 und einem Konterbügel 16. Im weiteren beinhaltet der Reduzierstopfen 12 einen Dichtungsring 18 und eine Spannschraube 20, wobei die letztgenannten Teile mit gleichnamigen aus der EP 0 365 808 B1 bekannten Teilen identisch sind, weshalb der Offenbarungsgehalt dieser Schrift in die vorliegende Beispielsbeschreibung einbezogen wird. Wie dort beschrieben, trägt die Abdeckkappe 14 unterseitig den in Einbaulage des Reduzierstopfens 12 an der zugängigen Seite 8 des Karosserieteils 6 um die Öffnung 4 zur Anlage kommenden Dichtungsring 18 und einen senkrecht von ihr wegragenden Verdrehsicherungszapfen 22, welcher in einem Durchgangsloch 24 des Konterbügels 16 gleitbar aufgenommen ist (Fig.3). Die Abdeckkappe 14 ist außerdem mit einer vorzugsweise mit einer Mittelachse 26 der Öffnung 4 koaxialen Durchgangsbohrung 28 zur Hindurchführung der Spannschraube 20 versehen. Die Abdeckkappe 14 und der Konterbügel 16 bestehen vorzugsweise aus Polyacetal, der Dichtungsring 18 aus einem Elastomer.

Der in Einbaulage des Reduzierstopfens 12 an der unzugängigen Seite 10 der Wand zur Anlage kommende Konterbügel 16 weist eine zur Durchgangsbohrung 28 der Abdeckkappe 14 fluchtende Kernlochbohrung 30 zum vorzugsweise selbstgewindeschneidenden Eindrehen der Spannschraube 20 auf. Der Konterbügel 16 ist dabei derart ausgebildet, daß er bei gegenüber der Dicke des Karosserieteils 6 größerem Abstand zwischen ihm und der Abdeckkappe 14 von der zugängigen Seite 8 des Karosserieteils 6 aus schräg durch die Öffnung 4 hindurch in die Einbaulage bringbar ist. Dann muß lediglich die Spannschraube 20 festgezogen werden, um den Konterbügel 16 axial zur unzugängigen Seite 10 des Karosserieteils hinzuziehen, so lange, bis er vollständig zur Anlage am Karosserieteil kommt. Der Einbauvorgang des Reduzierstopfens 12 verläuft analog zum Einbau des in der EP 0 365 808 B1 zitierten Verschlußstopfens, deshalb sollen hierzu keine weiteren Ausführungen erfolgen.

Im Unterschied zur Abdeckkappe der EP 0 365 808 B1 ist die Abdeckkappe 14 gemäß der Erfindung zweiteilig und besteht aus einem Kappenoberteil 32 und einem Kappenunterteil 34, wobei letzteres den Dichtungsring 18 und den vorzugsweise einstückig mit ihm ausgebildeten Verdrehsicherungszapfen 22 trägt. Außerdem sind im Kappenunterteil 34 zwei jeweils mit einer Einzelkabeldichtung 36 versehene Kabeldurchführungsbohrungen 38 zur Führung der Kabel 2 von der unzugängigen Seite 10 der Öffnung 4 in eine zwischen dem Kappenunterteil 34 und dem Kappenoberteil 32 gebildete, die Kabeldurchführungsbohrungen 38 spritzwasserschützende Kammer 40 vorgesehen.

In die Abdeckkappe 14 ist im weiteren ein im wesentlichen quer zur Mittelachse 26 der Öffnung 4 verlaufender Kabelführungskanal 42 integriert, durch welchen die beiden Kabel 2 in die Kammer 40 des Reduzierstopfens 12 hinein- bzw. herausgeführt sind. Der Kabelführungskanal 42 wird durch zwei zusammengesetzte, rinnenförmige Halbschalen gebildet, wobei die eine Halbschale 44 am Kappenoberteil 32 und die andere Halbschale 46 am Kappenunterteil 34 angeformt ist und sich je nach radial außen erstreckt. In Zusammenbaulage des Kappenoberteiles 32 und Kappenunterteiles 34 ist zwischen den zusammengesetzten Halbschalen 44, 46 ein Ende eines Wellrohres 48 gehalten, durch welches die beiden Kabel 2 zunächst in die Kammer 40 und dann unter Richtungsumlenkung zu den Kabeldurchführungsbohrungen 38 im Kappenunterteil 34 geführt sind.

Wie anhand Fig.3 zu sehen ist, weisen die den Kabelführungskanal 42 bildenden Halbschalen 44, 46 an ihrem radial inneren Umfang in Umfangsrichtung verlaufende Rippen 50 auf, welche in radial äußere, ebenfalls in Umfangsrichtung verlaufende Ringnuten 52 des Wellrohres 48 eingreifen. Mittels einer diametral gegenüber dem Kabelführungskanal 42 angeordneten, vorzugsweise als Filmscharnier 54 mit zwei zusätzlichen Hakenscharnieren 56 ausgebildeten Gelenkverbindung 58 ist das Kappenoberteil 32 relativ zum Kappenunterteil 34 um eine Achse 60 quer zur Mittelachse 26 der Öffnung 4 schwenkbar, wie in Fig.3 bis Fig.5 gezeigt ist. Die den Kabelführungskanal 42 bildenden Halbschalen 44, 46 sind mittels zweier Clipbefestigungen 62 miteinander lösbar verriegelt, wodurch das Kappenoberteil 32 auf dem Kappenunterteil 34 und das Wellrohr 48 im Kabelführungskanal 42 gehalten wird. In der verriegelten Stellung decken sich die Ränder des Kappenoberteiles 32 und Kappenunterteiles 34, wobei die Kabeldurchführungsbohrungen 38 vom Kappenoberteil 32 vollständig abgedeckt werden.

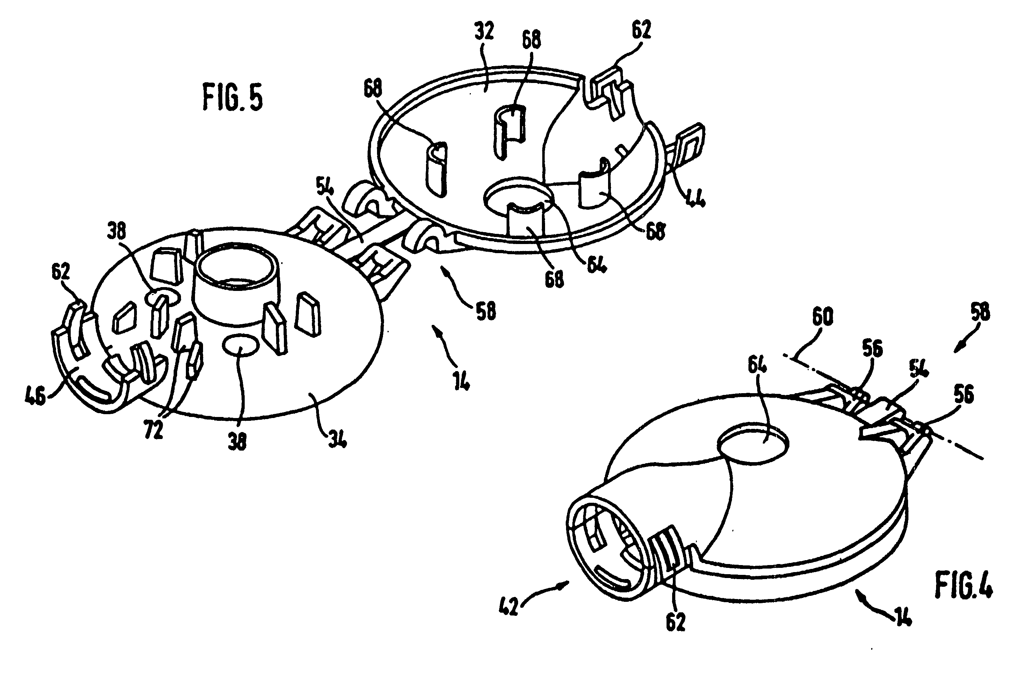

Nach Lösen der Verriegelung der beiden Halbschalen 44, 46 kann das Kappenoberteil 32 in eine aufgeklappte Stellung gebracht werden, welche in Fig.5 ohne Kabel dargestellt ist. In dieser Stellung können die Kabel 2 zuerst durch die Kabeldurchführungsbohrungen 38 im Kappenunterteil 34 und danach durch den Kabelführungskanal 42 oder auch in umgekehrter Richtung durchgefädelt werden. Im Kappenoberteil 32 ist eine mit der Spannschraube 20 koaxiale Zugangsöffnung 64 zum Angriff eines Werkzeugs an der Spannschraube 20 vorgesehen. Da die Spannschraube 20 jedoch auch bei aufgeklapptem Kappenoberteil 32 festziehbar ist, könnte auf die Zugangsöffnung 64 verzichtet werden.

Wie am besten anhand von Fig.2 zu sehen ist, sind die in die Kabeldurchführungsbohrungen 38 eingesteckten Einzelkabeldichtungen 36 vorzugsweise als Dichthülsen ausgebildet, welche je einen vom Rand der Kabeldurchführungsbohrung 38 nach radial außen wegragenden, zum Kappenoberteil 32 weisenden Druckring 66 haben. Vom Kappenoberteil 32 ragen vorzugsweise als Zylindermantelabschnitte mit kreisbogenförmigem Querschnitt ausgebildete, mit den Kabeldurchführungsbohrungen 38 fluchtende Niederhalter 68 zum Niederhalten der Dichthülsen 36 in den Kabeldurchführungsbohrungen 38 unterseitig weg, wie aus Fig.2 und Fig.5 hervorgeht. Diese Niederhalter 68 sind mit ihren freien Stimflächen in der verriegelten Stellung des Kappenoberteiles 32 auf die Druckringe 66 der Dichthülsen 36 gedrückt, wie am besten in Fig.2 zu sehen ist. Hierdurch werden zum einen die Druckringe 66 der Dichthülsen 36 dichtend gegen die Ränder der Kabeldurchführungsbohrungen 38 gedrückt und zum anderen die Dichthülsen 36 gestaucht, da gleichzeitig die von den Druckringen 66 wegweisenden Stirnflächen der Dichthülsen 36 gegen radial innere Absätze 70 der Kabeldurchführungsbohrungen 38 gepreßt werden. Durch die axiale Stauchung weichen die vorzugsweise aus Gummi bestehenden Dichthülsen 36 radial aus, wodurch die Dichtsicherung weiter gesteigert wird. Zur Zugentlastung sind die beiden Kabel 2 in einen Zwischenraum zwischen zwei vom Kappenunterteil 34 nach oben wegragende Rippen 72 klemmbar, welche am besten anhand von Fig.5 zu sehen sind.

Gemäß einer weiteren Ausführungsform können mit der erfindungsgemäßen Kabeldurchführung 1 auch mehr als zwei Kabel 2 durch die Öffnung 4 geführt werden, wobei dann mehrere Kabeldurchführungsbohrungen 38 vorgebohrt sind, von welchen dann die nicht zur Kabeldurchführung genutzten mit Blindstopfen verschlossen sind.

## Patentansprüche

1. Kabeldurchführung zum Durchführen mindestens eines Kabels (2) durch eine nur von einer Seite (8) zugängigen Öffnung (4) in einer Wand (6), insbesondere einem Karosserieteil eines Kraftfahrzeugs, enthaltend
- eine zweiteilige Abdeckkappe (14), die einen an einem Kappenunterteil (34) lösbar befestigten Kappenoberteil (32) aufweist,
- einen am Kappenunterteil (34) gehaltenen Dichtungsring (18), welcher um die Öffnung (4) an der zugängigen Seite (8) der Wand (6) anliegt,
- einen Konterbügel (16), der mittels eines Verdrehsicherungszapfens (22) gegenüber dem Kappenunterteil (34) verdrehsicher gehalten ist und bei größerem Abstand zum Kappenunterteil (34) als der Dicke der Wand (6) von der zugängigen Seite der Wand (6) aus durch die Öffnung (4) geführt, an einer unzugängigen Seite (10) der Wand (6) anliegt und
- eine Spannschraube (20), welche durch eine Durchgangsbohrung (28) des Kappenunterteils (34) hindurchgeführt ist und in eine Kernlochbohrung (30) des Konterbügels (16) eingedreht ist, wobei
- das Kappenunterteil (34) eine mit einer Kabeldichtung (36) versehene Kabeldurchführungsbohrung (38) von der unzugängigen Seite (10) der Öffnung (4) in eine zwischen dem Kappenoberteil (32) und dem Kappenunterteil (34) gebildete Kammer (40) aufweist und wobei
- die Abdeckkappe (14) einen im wesentlichen senkrecht zur Mittelachse (26) der Öffnung (4) verlaufenden Kabelführungskanal (42) aufweist, durch welchen das wenigstens eine Kabel (2) aus der Kammer (40) an der zugängigen Seite (8) der Öffnung (4) geführt ist.

2. Kabeldurchführung nach Anspruch 1,
**dadurch gekennzeichnet, dass** den Kabelführungskanal (42) bildende Halbschalen (44, 46) in Zusammenbaulage des Kappenoberteiles (32) und Kappenunterteiles (34) miteinander lösbar verriegelt sind und an ihrem radial inneren Umfang in Umfangsrichtung verlaufende Rippen (50) aufweisen, welche in radial äußere Ringnuten (52) eines Wellrohres (48) eingreifen.

3. Kabeldurchführung nach Anspruch 2,
**dadurch gekennzeichnet, dass** zwischen den zusammengesetzten Halbschalen (44, 46) das Ende des Wellrohres (48) gehalten ist, innerhalb welchem das Kabel (2) geführt ist.

4. Kabeldurchführung nach einem der vorhergehenden Ansprüche, **dadurch gekennzeichnet, dass** die Kabeldichtung eine Dichthülse (36) ist, welche in die Kabeldurchführungsbohrung (38) eingesteckt ist und einen von deren Rand nach radial außen wegragenden, zum Kappenoberteil (32) weisenden Druckring (66) beinhaltet.

5. Kabeldurchführung nach Anspruch 4, **dadurch gekennzeichnet, dass** vom Kappenoberteil (32) mindestens ein vorzugsweise als Zylindermantelabschnitt mit kreisbogenförmigem Querschnitt ausgebildeter, in Zusammenbaulage mit der Kabeldurchführungsbohrung (38) fluchtender Niederhalter (68) zum Niederhalten der Dichthülse (36) in der Kabeldurchführungsbohrung (38) unterseitig wegragt, welcher auf den Druckring (66) der Dichthülse (36) gedrückt ist.

6. Kabeldurchführung nach einem der vorhergehenden Ansprüche, **dadurch gekennzeichnet, dass** im Kappenunterteil (34) mehrere Kabeldurchführungsbohrungen (38) vorgesehen sind, von welchen die nicht zur Kabeldurchführung genutzten mit Blindstopfen wasserdicht verschlossen sind.

7. Kabeldurchführung nach einem der vorhergehenden Ansprüche, **dadurch gekennzeichnet, dass** das Kabel (2) zur Zugentlastung in einen Zwischenraum zwischen zwei vom Kappenunterteil (34) nach oben wegragende Rippen (72) geklemmt ist.

## Claims

1. Cable passage for passing at least one cable (2) through an orifice (4) accessible only from one side (8) and provided in a wall (6), particularly in a body part of a motor vehicle, containing
• a bipartite cover (14) with an cover upper part (32) which can be detached from a cover lower part (34)
• a sealing ring (18) retained in the cover lower part (34) and locating against the accessible side (8) of the wall (6) around the orifice (4),
• a counter bow (16) which is secured against turning relative to the cover lower part (34) by means of an anti-torsion pin (22) and, in the event of the distance to the cover lower part (34) being larger than the thickness of the wall (6), is passed from the accessible side of the wall (6) through the orifice (4) and contacts an inaccessible side (10) of the wall (6) and
• a tensioning bolt (20) passed through a passage bore (28) in the cover lower part (34) and screwed in a core bore (30) of the counter bow (16),
• the cover lower part (34) showing a cable passage bore (38) provided with a cable seal (36) and opening from the inaccessible side (10) of the orifice (4) into a chamber (40) between the cover upper part (32) and the cover lower part (34) and
• the cover (14) having a cable passage duct (42) which is essentially perpendicular to the centre axis (26) of the orifice (4) and through which the at least one cable (2) is passed from the chamber (40) on the accessible side (8) of the orifice (4).

2. Cable passage according to Claim 1, **characterised in that** when the cover upper part (32) and the cover lower part (34) are fitted together the split shells (44, 46) forming the cable passage duct (42) are detachably interlocked and have ribs (50) provided on their inner circumference, radially arranged in circumferential direction and meshing with radial outer ring grooves (52) of a corrugated pipe (48).

3. Cable passage according to Claim 2, **characterised in that** the end of the corrugated pipe (48) is held between the assembled split shells (44, 46), the cable (2) being rooted within said corrugated pipe (48).

4. Cable passage according to one of the aforementioned Claims, **characterised in that** the cable seal is a sealing sleeve (36) plugged into the cable passage bore (38) and containing a pressure ring (66) radially extending from the edge of said cable passage bore (38) towards the outside and pointing towards the cover upper part (32).

5. Cable passage according to Claim 4, **characterised in that** at least one holding-down device (68) for holding down the sealing sleeve (36) in the cable passage bore (38) presses on the pressure ring (66) of the sealing sleeve (36), points away from the lower side of the cover upper part (32), is designed preferably as a cylinder jacket section with a arc-type cross-section and is, when assembled, aligned with the cable passage bore (38).

6. Cable passage according to one of the aforementioned Claims, **characterised in that** several cable passage bores (38) are provided in the cover lower part (34), of which bores (38) those not used for cable passage are closed up with blind plugs in a watertight manner.

7. Cable passage according to one of the aforementioned Claims, **characterised in that** in order to reduce tension, the cable (2) is clamped in a space between two ribs (72) pointing upwards and away from the cover lower part (34).

## Revendications

1. Passage de câbles pour le passage d'au moins un câble (2) par une ouverture (4) accessible uniquement sur un côté (8) et disposée dans une paroi (6), en particulier une pièce de carrosserie d'un véhicule à moteur, comprenant
- un cache de recouvrement (14) en deux éléments, présentant une pièce supérieure du cache (32) fixée de manière démontable à une pièce inférieure du cache (34)
- un joint d'étanchéité (18) bloqué au niveau de la pièce inférieure du cache (34), placé autour de l'ouverture (4) sur le côté accessible (8) de la paroi (6)
- une contre-bride (16) anti-rotation, bloquée par rapport à la pièce inférieure du cache (34) au moyen d'un tourillon anti-rotation (22) et guidée, en cas d'un plus grand espacement par rapport à la pièce inférieure du cache (34) que l'épaisseur de la paroi (6), par l'ouverture à partir du côté accessible de la paroi (6), située sur un côté (10) inaccessible de la paroi (6) et
- une vis de serrage (20) passant par un alésage (28) de la pièce inférieure du cache (34) et vissée dans un alésage avant-trou (30) de la contre-bride (16), auquel cas
- la pièce inférieure du cache (34) présente un alésage pour passage de câbles (38) doté d'un joint d'étanchéité de câble (36) à partir du côté inaccessible (10) de l'ouverture (4) dans un compartiment (40) formé entre la pièce supérieure du cache (32) et la pièce inférieure du cache (34), et auquel cas
- le cache de recouvrement (14) présentant un conduit de guidage de câble (42) passant pour l'essentiel perpendiculairement à l'axe médian (26) de l'ouverture (4), par lequel au moins un câble (2) est guidé hors du compartiment (40) sur le côté accessible (8) de l'ouverture (4).

2. Passage de câbles selon la revendication 1, **caractérisé par le fait que** des demi-coquilles (44, 46) formant les conduits de guidage de câbles (42) sont verrouillées de manière démontable l'une avec l'autre dans un assemblage composé de la pièce supérieure du cache (32) et de la pièce inférieure du cache (34) et présentent dans leur volume intérieur diamétral des nervures (50) passant dans le sens du volume, qui s'engrènent dans des gorges annulaires (52) extérieures radiales d'une gaine annelée (48).

3. Passage de câbles selon la revendication 2, **caractérisé par le fait que** l'extrémité de la gaine annelée (48) est maintenue entre les demi-coquilles (44, 46) assemblées et à l'intérieur de laquelle le câble (2) est guidé.

4. Passage de câbles selon une des revendications mentionnées précédemment, **caractérisé par le fait que** l'étanchéité du câble est assurée par une gaine étanche (36) emmanchée dans l'alésage de passage de câbles (38) et contenant une bague de serrage (66) dépassant diamétralement de son bord vers l'extérieur et orientée vers la pièce supérieure du cache (32).

5. Passage de câbles selon la revendication 4, **caractérisé par le fait qu'**à partir de la pièce supérieure du cache (32), au moins un serre-flan (68) formé de préférence en tant que portion de corps cylindrique avec une section en arc de cercle, à l'alignement en position assemblée avec l'alésage de passage de câbles (38) dépasse par dessous pour comprimer la gaine étanche (36) dans l'alésage de passage de câbles (38), lequel est comprimé sur la bague de serrage (66) de la gaine étanche (36).

6. Passage de câbles selon une des revendications mentionnées précédemment, **caractérisé par le fait que** plusieurs alésages de passage de câbles (38) sont prévus dans la pièce inférieure du cache (34) qui, lorsqu'ils ne sont pas utilisés pour le passage de câbles, sont condamnés de manière étanche avec des bouchons d'obturation.

7. Passage de câbles selon une des revendications mentionnées précédemment, **caractérisé par le fait que** le câble (2), afin de réduire la contrainte de traction, est coincé dans un compartiment intermédiaire entre deux nervures (72) dépassant vers le haut à partir de la pièce inférieure du cache (34).
